# EUROPEAN PATENT SPECIFICATION

(11) **EP 1 705 784 B1**
(45) Date of publication and mention of the grant of the patent: **24.12.2008**
(21) Application number: 06005903.7
(22) Date of filing: 22.03.2006
(51) Int. Cl.: B60K 6/543

(54) **Straddle-type hybrid vehicle**
Im Grätschsitz zu benutzendes Hybridfahrzeug
Véhicule hybride du type monté a califourchon

(30) Priority: 22.03.2005 JP 2005082815
(43) Date of publication of application: 27.09.2006
(73) Proprietor: Yamaha Hatsudoki Kabushiki Kaisha, Iwata-shi, Shizuoka-ken 438-8501 (JP)
(72) Inventor: Terada, Junji Yamaha Hatsudoki K.K., Iwata-shi Shizuoka-ken 438-8501 (JP); Hino, Haruyoshi Yamaha Hatsudoki K.K., Iwata-shi Shizuoka-ken 438-8501 (JP); Ono, Tomohiro Yamaha Hatsudoki K.K., Iwata-shi Shizuoka-ken 438-8501 (JP); Takechi, Hiroaki Yamaha Hatsudoki K.K., Iwata-shi Shizuoka-ken 438-8501 (JP)
(74) Representative: Grünecker, Kinkeldey, Stockmair & Schwanhäusser Anwaltssozietät

(56) References cited:
- EP-A- 1 220 427
- EP-A- 1 270 302
- EP-A- 1 388 923
- EP-A- 1 518 737
- WO-A-20/05076463

## Description

The present invention relates to a straddle-type hybrid vehicle provided with an engine and a rotary electric device according to the preamble of independent claim 1. Such a straddle-type hybrid vehicle can be taken from the prior art document EP 1 518 737 A1. In particular, said prior art document EP 1 518 737 A1 refers to a power unit structure for a hybrid vehicle, especially a scooter-type vehicle, wherein the drive unit comprises an engine, a crankshaft thereof is connected with a CVT transmission by means of a starter clutch, and a drive motor is connected with transmission means connected with the rear wheel. Said motor can be used as a generator and is connected with the CVT by means of a one-way clutch. By means of said one-way clutch, no drive torque can be transmitted from the rear wheel to the CVT.

The prior art document EP 1 270 302 A2 teaches an energy recovery mechanism in a hybrid scooter according to the preamble of claim 1. In particular, said prior art document teaches a scooter-type vehicle with an internal combustion engine means for driving a rear wheel by means of a transmission arrangement, wherein an electric driving/generating motor is provided. Said motor is either connected by a flywheel clutch (first embodiment) or is directly fixed to the drive shaft (second embodiment) of the transmission means connected to the rear wheel. Said driving/generating means can charge the battery or provide additional driving power, so that same constitutes an auxiliary power device.

The prior art document EP 1 388 923 A2 teaches an electrically driven straddle-type vehicle, wherein the electric motor is used as a single power source. A gap in said rotary electric motor is adjusted by a flywheel means, so that torque generation is adapted to the rotational speed of the electric motor.

Recently, a hybrid vehicle has been developed, which is driven with a combined drive source of an engine operated by fuel combustion energy and a rotary electric device operated by electric energy (electric motor that also serves as a generator). In the conventionally well-known hybrid vehicle, the rotary electric device is connected to a crankshaft of the engine to transmit a driving force of the rotary electric device to a driving tire via the crankshaft, a clutch and a transmission. In such hybrid vehicle, the crankshaft of the engine must be operated in conjunction with the operations of the rotary electric device. This creates a problem that a driving force of the rotary electric device is consumed by rotation of the crankshaft and up-down motion of a piston, which inhibits the driving force of the rotary electric device from being sufficiently transmitted to the driving tire. Further, in such hybrid vehicle, the rotary electric device must be operated in conjunction with the rotation of the crankshaft while the engine is in operation. This creates another problem with the engine being constantly exerted by a power generation load in accordance with the engine speed, when the engine is in operation.

With respect to these problems, a hybrid vehicle disclosed in JP-A-2003-80956 employs a driving force transmission mechanism for transmitting a driving force of the engine to a driving tire, in which a rotary electric device lies closer to the driving tire than the clutch does, that is, a driving force of the rotary electric device is transmitted to the driving tire without clutch. In such hybrid vehicle, when the rotary electric device is in operation, a driving force thereof is transmitted only to the driving tire while the clutch disengages transmission of the driving force to the engine. Thus, while the rotary electric device is in operation, the crankshaft of the engine and the like are not operated in conjunction with the rotation of the rotary electric device. This can resolve the problem, caused by the aforementioned well-known hybrid vehicle, that a driving force of the rotary electric device is consumed by rotation of the crankshaft when the rotary electric device is in operation.

However, the hybrid vehicle disclosed in JP-A-2003-80956 allows the rotary electric device to rotate in synchronization with the operations of the engine. This means that there is a problem remaining with the engine being constantly exerted by a power generation load in accordance with the engine speed.

The present invention is derived from the foregoing problems, and the object of the invention is to provide a straddle-type hybrid vehicle as indicated above which can efficiently transmit a driving force of a rotary electric device to a driving tire, when the rotary electric device is in operation.

According to the present invention said object is solved by straddle-type hybrid vehicle having the features of independent claim 1. Preferred embodiments are laid down in the dependent claims.

Accordingly, it is provided a straddle-type hybrid vehicle provided with an engine and a rotary electric device, comprising a driving force transmission mechanism for transmitting a driving force outputted from the engine to a driving wheel, wherein the driving force transmission mechanism includes a clutch for allowing or disengaging transmission of the driving force to the driving wheel, and an intermediate mechanism, which is provided between the clutch and the driving wheel, for working in conjunction with an output shaft of the rotary electric device.

With the present straddle-type hybrid vehicle, beneficially a crankshaft and the like are not operated in conjunction with rotation of the rotary electric device, and a power generation load from the rotary electric device to be exerted to the engine, can be adjusted when the engine is in operation.

The rotary electric device includes a rotor, a stator located so as to face the rotor, and an adjustment mechanism for adjusting a field of the rotary electric device.

The stator includes a first stator disposed so as to face the rotor, and a second stator disposed opposed to a face on the other side of another face that faces the rotor, wherein the first stator has plural first teeth with the side peripheral surfaces around which coil windings are formed, wherein the second stator has plural second teeth on a face thereof that faces the first stator, and wherein the adjustment mechanism adjusts an angle of the rotation of the second stator about the output shaft relative to the first stator.

Still further, preferably the rotary electric device is located such that the output shaft thereof is parallel to a driving shaft of the driving wheel. Therein, the rotary electric device may be located such that an axis of the output shaft of the rotary electric device is aligned with an axis of the driving shaft of the driving wheel.

Yet further, preferably the intermediate mechanism provided between the clutch and the driving wheel comprises a gear mechanism for the driving force transmission member to work in conjunction with the output shaft of the rotary electrical device. Therein, it is further beneficial if a gear is mounted to the driving shaft, and the driving force transmission mechanism further has an intermediate shaft for transmitting the driving force of the engine, and wherein the intermediate shaft is linked to the driving shaft via the gear while being positioned such that a distance between axes of the intermediate shaft and the driving shaft is smaller than a radius of a wheel of the driving wheel. Therein, it is yet further beneficial if the intermediate shaft is located closer to the crankshaft of the engine than the driving shaft is. Still further, beneficially the intermediate shaft is spaced away from the crankshaft of the engine, and the driving force transmission mechanism further has a speed reduction mechanism, which extends in the longitudinal direction of the vehicle for transmitting the driving force from the crankshaft to the intermediate shaft, for transmitting the driving force of the engine from the crankshaft to the intermediate shaft, and wherein the rotary electric device is provided on the outer side in the lateral direction of the vehicle relative to the speed reduction mechanism.

In the following, the present invention is explained in greater detail with respect to several embodiments thereof in conjunction with the accompanying drawings, wherein:
- FIG. 1: is a side view of a hybrid motorcycle,
- FIG. 2: is a schematic cross-sectional view of a driving force transmission mechanism and a rotary electric device,
- FIG. 3: is an enlarged cross-sectional view, showing the rotary electric device and a rear part of the driving force transmission mechanism in the direction a vehicle moves ahead, according to an embodiment not forming part of the present invention.
- FIG.4: is an exploded perspective view of a rotary electric device according to an embodiment of the present invention
- FIG. 5: is a perspective view, showing an assembled rotary electric device according to an embodiment in combination with an adjustment mechanism ,
- FIGs. 6(a)-6(c): show operations of a second stator of the rotary electric device according to another embodiment, which reciprocatively rotates by certain angle, and
- FIGs. 7(a) and 7(b): illustrate a principle of controlling rotation of the rotary electric device according to another embodiment, from high-torque, low-speed rotation to low-torque, high-speed rotation.

Within the Figures,
- 1:: is a hybrid motorcycle,
- 2:: is a front fork,
- 3:: is a handlebar,
- 4:: is a grip,
- 5:: is a rearview mirror,
- 6:: is a meter,
- 8:: is a seat,
- 10:: is a battery,
- 11:: is a body frame,
- 12:: is an engine,
- 12a:: is a cylinder,
- 12b:: is a piston,
- 12c:: is a connecting rod,
- 14:: is a driving force transmission mechanism,
- 15:: is a front tire,
- 16:: is a rotary electric device,
- 18:: is a rear tire,
- 18a:: is a wheel,
- 20:: is a case,
- 22:: is a rear suspension,
- 24:: is a crankshaft,
- 24a:: is one end of crankshaft,
- 26:: is a centrifugal clutch,
- 26a:: is a clutch shoe,
- 26b:: is a clutch drum,
- 28:: is a belt-driven continuously variable transmission,
- 28a:: is a drive pulley,
- 28b:: is a belt,
- 28c:: is a driven pulley,
- 28d:: is a movable sheave,
- 28e:: is a fixed sheave,
- 30:: is a first intermediate shaft,
- 30a,30b:: are bearings,
- 32:: is a second intermediate shaft,
- 32a:: is a gear,
- 32b, 32c:: are bearings,
- 34:: is a rear axle,
- 34a:: is a gear,
- 34b:: is an end of rear axle,
- 36:: is a planetary gear mechanism,
- 36a:: is a planetary carrier,
- 36b:: is an end of planetary carrier,
- 36c:: is a ring gear,
- 36d:: is an end of planetary carrier,
- 36e:: is a planetary gear,
- 40:: is an output shaft,
- 40a, 40b:: are ends of output shaft,
- 42:: is a stator,
- 44:: is a rotor,
- 46:: is a yoke,
- 48:: is a magnet,

- 49:: is a bracket,
- 50:: is an adjustment mechanism,
- 51:: is a slider member,
- 53:: is a stepping motor,
- 54:: is a stator,
- 55:: is a rotor,
- 55b:: is an inner cylindrical member,
- 60, 62, 63, 64:: are bearings,
- 65:: is a rotation prevention member,
- 67, 69, 70:: are bearings,
- 71:: is a rotor,
- 74:: is a ring portion,
- 75:: is a taper portion,
- 76:: is a first cylindrical portion,
- 77:: is a ring portion,
- 78:: is a second cylindrical portion,
- 81:: are first teeth,
- 82:: is a coil,
- 83:: is a first stator,
- 84:: are second teeth,
- 85:: is a base,
- 86:: is a fitting hole,
- 87:: is a second stator,
- 88:: is a slit,
- 89:: are gear engagement teeth,
- 91:: is a third speed reduction gear,
- 92:: is a second speed reduction gear,
- 93:: is a first speed reduction gear,
- 94:: is a motor, and
- 95:: is a worm gear,

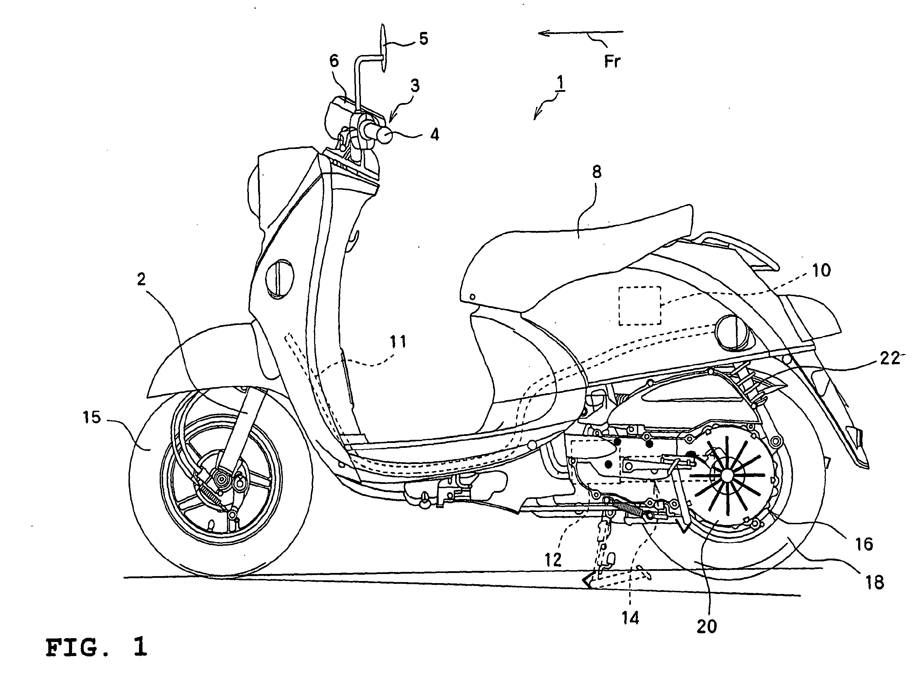

FIG. 1 is an external side view of a straddle-type hybrid vehicle. In FIG. 1, the straddle-type hybrid vehicle represents a hybrid motorcycle. A hybrid motorcycle 1 has a front fork 2 extending upward from a front lower part of the vehicle. A front wheel 15 is provided forward of the hybrid motorcycle 1. A bottom end of the front fork 2 is connected to a front axle of a front wheel 15. The front wheel is supported rotatably about the front axle. A handlebar 3 extending in lateral direction of the vehicle is supported at the top end of the front fork 2. Each end of the handlebar 3 is equipped with a grip 4 while a mid-portion of the handlebar 3 is equipped with rearview mirrors 5 and a meter 6.

A body frame 11 extends from a mid-portion of the front fork 2 toward the rear of the vehicle. More specifically, the body frame 11 extends obliquely downward to the rear of the vehicle, then curves and horizontally extends toward the rear of the vehicle. Then, the body frame 11 further curves to extend obliquely upward to the rear of the vehicle. A seat 8 is disposed above the rear part of the body frame 11. A battery 10 is placed below the rear part of the seat 8.

An engine 12 is installed below the mid-portion of the seat 8. A driving force transmission mechanism 14 and a rotary electric device 16 are disposed behind the engine 12 in the direction the vehicle moves ahead (direction shown by Fr in FIG. 1). The engine 12 and the rotary electric device 16 are connected to a driving tire or a rear tire 18 via the driving force transmission mechanism 14. The hybrid motorcycle 1 uses either one of or both driving forces of the engine 12 and the rotary electric device 16 to rotate the rear tire 18 so that the motorcycle 1 can move. When the hybrid motorcycle 1 moves using the driving force of the engine 12, the rotary electric device 16 can serve as a generator to charge the battery 10.

The rotary electric device 16 and the driving force transmission mechanism 14 are housed in a case 20. A front part of the case 20 is supported with the body frame 11. A rear suspension 22 extends obliquely downward of the vehicle. One end of the rear suspension 22 is linked with a rear end of the body frame 11 while the other end of the rear suspension 22 is fastened to the rear part of the case 20 with bolts. Extension/compression of the rear suspension 22 allows the rear tire 18, which is connected to the case 20 and the driving force transmission mechanism 14, to swing up and down. This enables absorption of shocks generated by the moving vehicle, thereby improving the riding comfort.

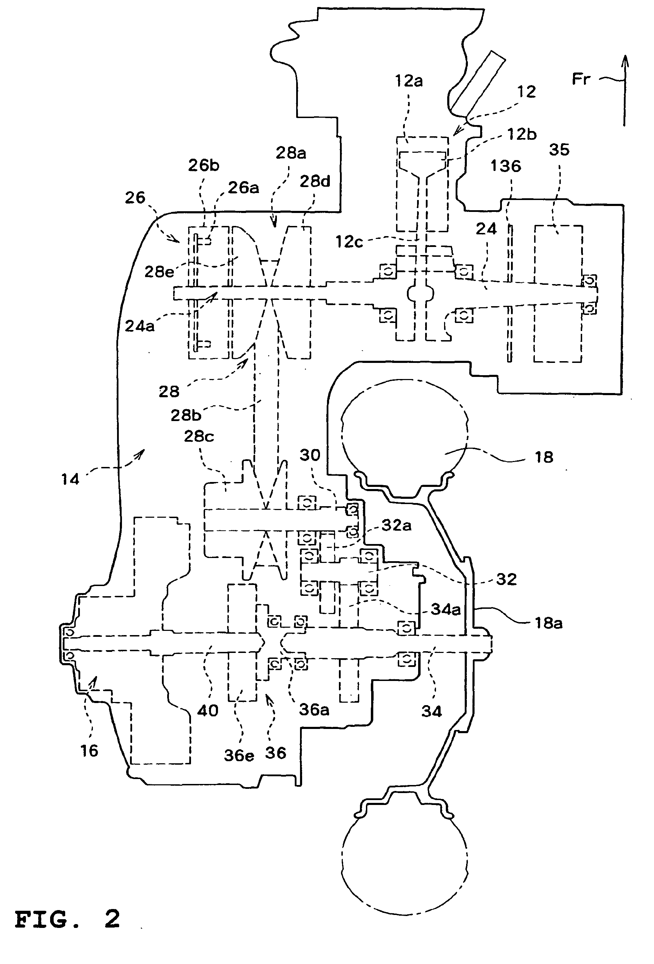

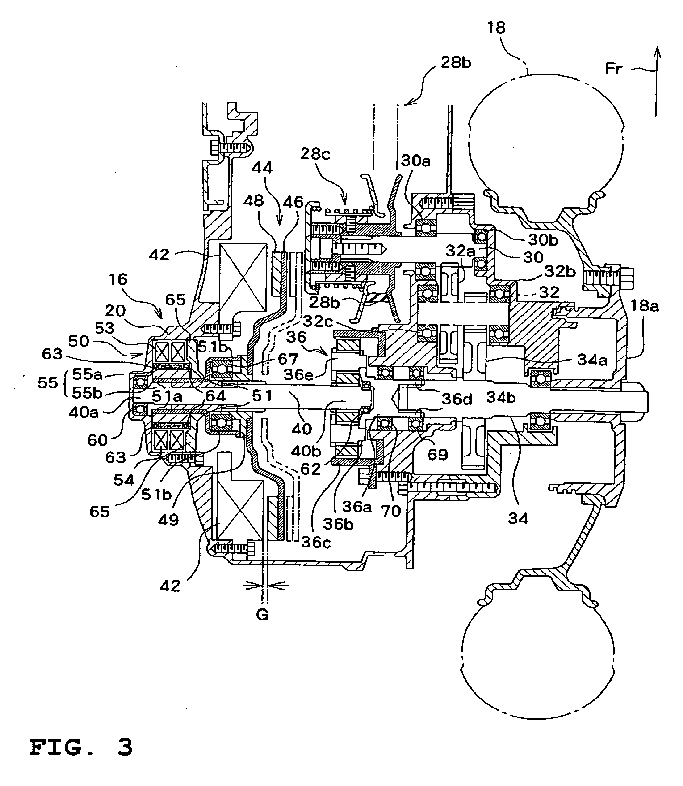

Now, with reference to FIGs. 2 and 3, the engine 12, the driving force transmission mechanism 14 and the rotary electric device 16 are described. FIG. 2 is a schematic cross-sectional view illustrating arrangement of the engine 12, the driving force transmission mechanism 14 and the rotary electric device 16. FIG. 3 is an enlarged cross-sectional view, showing the rotary electric device and a rear part of the driving force transmission mechanism 14 in the direction the vehicle moves ahead.

As described above, the driving forces of the engine 12 and the rotary electric device 16 are transmitted to the rear tire 18 through the driving force transmission mechanism 14. As shown in FIG. 2, the driving force transmission mechanism 14 includes a clutch 26, a speed reduction mechanism 28, a first intermediate shaft 30, a second intermediate shaft 32 and a rear axle 34. The driving force of the engine 12 is transmitted to the rear tire 18 through the driving force transmission mechanism 14. In this embodiment, a well-known centrifugal clutch is used as the clutch 26, and a well-known belt-driven continuously variable transmission is used as the speed reduction mechanism 28.

In FIG. 2, the engine 12 itself is a four-cycle single cylinder engine, in which fuel is supplied to a combustion chamber within a cylinder 12a, and a piston 12b moves up and down inside the cylinder 12a during the compression, expansion, exhaust and intake strokes. A connecting rod 12c is operatively connected to the piston 12b at the lower part thereof. The bottom end of the connecting rod 12c is linked to a crankshaft 24. Up/down movement of the piston 12b allows the crankshaft 24 to rotate about its axis to output the engine driving force.

The centrifugal clutch 26 allows or disengages transmission of the driving force outputted from the crankshaft 24 to the belt-driven continuously variable transmission 28 disposed on the downstream side of the driving force transmission mechanism 14.

To be more specific, the centrifugal clutch 26 is located coaxially with the crankshaft 24 at an end 24a thereof. The centrifugal clutch 26 includes plural clutch shoes 26a, and a clutch drum 26b that encloses the entire clutch shoes 26a and that is rotatable independently from the clutch shoes 26a. The clutch shoes 26a can move radially, and are linked with the crankshaft 24 so that the clutch shoes 26a and the crankshaft 24 work in conjunction with one another. In accordance with rotation of the crankshaft 24, the clutch shoes 26a rotate about the axis of the crankshaft 24. As a rotational speed of the crankshaft 24 increases, the clutch shoes 26a move radially outward by a centrifugal force of the crankshaft 24. The rotational speed of the crankshaft 24 increases to a predetermined speed or greater, the clutch shoes 26a and the clutch drum 26b come into contact with each other. The mutual friction force allows the clutch drum 26b to rotate about the axis of the crankshaft 24 in conjunction with the clutch shoes 26a. Thus, when the rotational speed of the crankshaft 24, that is, the rotational speed of the engine 12, is equal to or lower than a predetermined speed, only the clutch shoes 26a rotate, and the centrifugal clutch 26 disengages transmission of the driving force of the engine 12. In turn, when the rotational speed of the engine 12 increases to a predetermined speed or greater, the clutch drum 26b works in conjunction with the clutch shoes 26a, thereby transmitting the driving force of the engine 12 to the belt-driven continuously variable transmission 28.

The belt-driven continuously variable transmission 28 is constructed to extend in the direction the vehicle moves ahead, and lies closer to the rear tire 18 than the rotary electric device 16 does. Specifically, the belt-driven continuously variable transmission 28 includes a drive pulley 28a, a belt 28b and a driven pulley 28c. The drive pulley 28a is inserted through the crankshaft 24 for free rotation, and located between the centrifugal clutch 26 and the engine 12. The driven pulley 28c is spaced apart from the drive pulley 28a and is located rearward of the drive pulley 28a in the direction the vehicle moves ahead. An axis of the driven pulley 28c is provided parallel to an axis of the drive pulley 28a, that is, the crankshaft 24, and closer to the rear tire 18 than the rotary electric device 16 is. A belt 28b is wrapped around the drive pulley 28a and the driven pulley 28c so that the both pulleys work in conjunction with each other. The drive pulley 28a is linked with the clutch drum 26b so that they work in conjunction with each other coaxially with the crankshaft 24. A driving force that has been transmitted from the clutch drum 26b is transmitted to the driven pulley 28c through the drive pulley 28a and the belt 28b.

The drive pulley 28a includes a movable sheave 28d that can move back and forth in the axial direction of the crankshaft 24, and a fixed sheave 28e that cannot move axially. In accordance with the rotational speed of the engine 12, the movable sheave 28d moves along the axis of the crankshaft 24. As the diameter of the drive pulley 28a varies, the diameter of the driven pulley 28c varies, and therefore, the reduction ratio varies, thereby accomplishing a continuously variable speed.

The first intermediate shaft 30 as an axis of the driven pulley 28c is fitted into the driven pulley 28c to transmit a driving force of the engine 12 from the driven pulley 28c to the first intermediate shaft, the second intermediate shaft 32, the rear axle 34 and the rear tire 18 in sequence.

Specifically, the first intermediate shaft 30 is rotatably supported by bearings 30a and 30b as shown in FIG. 3. The driving force transmitted to the driven pulley 28c causes the first intermediate shaft 30 to rotate. The first intermediate shaft 30 is provided such that the shaft 30 has an axis that lies on the same plane as a plane formed by axes of the rear axle 34 and the crankshaft 24, and such that the shaft 30 lies closer to the crankshaft 24 than the rear axle 34 does. This results in a reduced distance between the drive pulley 28a, which is attached to the crankshaft 24, and the driven pulley 28c, which shares a common axis member with the first intermediate shaft 30. Thereby, a compact construction of the driving force transmission mechanism 14 can be accomplished.

The first intermediate shaft 30 has a spline on its outer peripheral surface on the rear tire 18 side. The spline meshes with a gear 32a mounted to the second intermediate shaft 32. The second intermediate shaft 32 is rotatably supported by bearings 32b and 32c so that the second intermediate shaft work in conjunction with the first intermediate shaft.

The second intermediate shaft 32 is provided such that its axis lies below a plane formed by axes of the rear axle 34 and the crankshaft 24. This allows a larger-sized gear 32a to be mounted to the second intermediate shaft 32 for a greater reduction ratio while reducing a distance between the first intermediate shaft 30 and the rear axle 34. Thereby, a compact construction of the driving force transmission mechanism 14 can be accomplished.

The first intermediate shaft 30 and the second intermediate shaft 32 are disposed such that a distance between the axes of the first intermediate shaft 30 and the rear axle 34 and a distance between the axes of the second intermediate shaft 32 and the rear axle 34 are both smaller than a radius of a wheel 18a. This allows the entire driving force transmission mechanism 14 to lie closer to the rear tire 18, thereby ensuring a large banking angle.

The second intermediate shaft 32 has a spline on its outer peripheral surface with the spline being closer to the rear tire 18 than the gear 32a and meshing with a gear 34a mounted to the rear axle 34, so that the spline and the gear 34a work in conjunction with each other. One end of the rear axle 34 is linked with the wheel 18a of the rear tire 18. Thus, a driving force of the engine is transmitted from the first intermediate shaft 30 through the second intermediate shaft and the rear axle 34 to the rear tire 18.

As mentioned above, the engine-driven vehicle can move with a driving force of the engine 12 transmitted to the centrifugal clutch 26, the belt-driven continuously variable transmission 28, the first intermediate shaft 30, the second intermediate shaft 32 and the rear axle 34. As shown in FIG. 2, one end of the crankshaft 24, which is opposite to the end at which the centrifugal clutch 26 is mounted, is provided with a generator 35. An output shaft of a starter motor (not shown) is connected to a gear 136 mounted to the crankshaft 24. When the engine 12 starts up, the starter motor can operate by electric power supplied from the battery 10 to drive the engine 12.

A route for transmitting a driving force, which extends from the rotary electric device 16 to the rear tire 18, is now described. As previously discussed, the driving force transmission mechanism 14 has the rear axle 34, which is connected to the planetary gear mechanism 36 that works in conjunction with an output shaft 40 of the rotary electric device 16, as shown in FIGs. 2 and 3. A driving force of the rotary electric device 16 is transmitted to the rear tire 18 through the planetary gear mechanism 36 and the rear axle 34.

Specifically, one end 40b of the output shaft 40 of the rotary electric device 16 engages with a planetary gear 36e of the planetary gear mechanism 36. A planetary carrier 36a connected to the planetary gear 36e connects to the rear axle 34 so that the planetary carrier 36a and the rear axle 34 work in conjunction with each other. The output shaft 40 of the rotary electric device 16 thus works in conjunction with the rear axle 34 through the planetary gear mechanism 36. As described above, the wheel 18a of the rear tire 18 is connected to the one end of the rear axle 34, thereby allowing the vehicle to move by a driving force of the rotary electric device 16 in addition to the driving force of the engine 12. Detailed constructions of the rotary electric device 16 and the planetary gear mechanism 36 are discussed later.

In this embodiment, as mentioned above, the planetary gear mechanism 36 and the rear axle 34, which work in conjunction with the output shaft 40 of the rotary electric device 16, are provided, along the route for transmitting a driving force, closer to the rear tire 18 than the centrifugal clutch 26 is. The rear axle 34, the second intermediate shaft 32, the first intermediate shaft 30, the belt-driven continuously variable transmission 28 and the clutch drum 26b of the centrifugal clutch 26 work in conjunction with each other. Therefore, while the rotary electric device 16 is in operation, a driving force of the rotary electric device 16 is transmitted to the rear axle 34, and then transmitted from the rear axle 34 to the second intermediate shaft 32, the first intermediate shaft 30, the belt-driven continuously variable transmission 28, and the clutch drum 26b in sequence. But, the transmission of this driving force is disengaged between the clutch drum 26b and the clutch shoes 26a such that no driving force is transmitted to the crankshaft 24 and the piston 12b connected to the crankshaft 24. As a result, while the rotary electric device 16 is in operation, the crankshaft 24 and the piston 12b do not work in accordance with the rotation of the rotary electric device 16. This allows a driving force of the rotary electric device 16 to be efficiently transmitted to the rear tire 18. In turn, while the engine 12 is in operation, a driving force of the engine 12 is transmitted to the rear axle 34 as well as to the rotary electric device 16 through the planetary gear mechanism 36. Under such condition, the rotary electric device 16 can serve as a generator.

Further, in this embodiment, the rotary electric device 16 is located on the side outer than the belt-driven continuously variable transmission 28 in the lateral direction of the vehicle. Also, a width of the driving force transmission mechanism 14 can therefore be reduced in the lateral direction of the vehicle.

Detailed description is given below of the rotary electric device 16 and a rear part of the driving force transmission mechanism 14 on the vehicle. As shown in FIG. 3, the planetary gear mechanism 36 reduces the rotational speed of the rotary electric device 16 to transmit the reduced-speed rotation to the rear axle 34.

More specifically, the planetary gear mechanism 36 is formed with: a ring gear 36c; the planetary carrier 36a; and plural planetary gears 36e; the planetary gears being connected to the planetary carrier 36a and rotating on their axes while revolving about the planetary carrier. The output shaft 40 has a spline at its end 40b closer to the planetary gear mechanism 36. The end 40b of the output shaft 40 is fitted into a center of the planetary gear mechanism 36, and the spline of the output shaft 40 meshes with the planetary gears 36e. The ring gear 36c is fixed to the case. When the output shaft 40 of the rotary electric device 16 rotates, the planetary gears 36e rotate on their axes while revolving about the output shaft 40. The planetary carrier 36a is rotatably supported with bearings 69 and 70. One end 36b of the planetary carrier 36a, which is closer to the rotary electric device 16, is connected to each planetary gear 36e. The plural planetary gears 36e revolve about the planetary carrier 36a, thereby allowing the planetary carrier 36a to rotate accordingly. One end 36d of the planetary carrier 36a, which is closer to the rear tire 18, has plural grooves axially formed on the inner peripheral surface of the end 36d. One end 34b of the rear axle 34, which is closer to the planetary gear mechanism 36, has a spline formed on the outer peripheral surface of the end 34b. The grooves formed on the inner peripheral surface of the planetary carrier 36a engage with the spline of the rear axle 34. A driving force of the rotary electric device 16 is thus transmitted to the rear axle 34 through the planetary gear mechanism 36. When a driving force of the engine 12 is used to rotate the rear axle 34, the driving force of the engine 12 is also transmitted from the rear axle 34 to the output shaft 40 of the rotary electric device 16 through the planetary carrier mechanism 36.

The rotary electric device 16 includes: a disc-shaped stator 42; a disc-shaped rotor 44 which oppositely faces the stator 42 with a space therebetween; the output shaft 40 running through centers of the stator 42 and the rotor 44; and an adjustment mechanism 50 for adjusting a spaced distance G between the rotor 44 and the stator 42.

The stator 42 is fastened to the case 20 with bolts and has a stator yoke (not shown) provided with teeth around which coil windings are formed. The rotor 44 has a disc-shaped yoke 46, and a cylindrical bracket 49 that is secured to an inner periphery of a hole formed at a center of the yoke 46 and that extends axially along the output shaft 40. The yoke 46 has plural magnets 48 fixed on its surface facing the stator 42, with their magnetic poles having alternately opposite polarity. The bracket 49 has plural grooves formed on its inner periphery with the grooves extending axially along the output shaft 40. A bearing 67 is fitted on the outer surface of the cylindrical portion of the bracket 49. An inner peripheral surface of the bearing 67 mates with the outer peripheral surface of the bracket 49.

One end 40a and the other end 40b of the output shaft 40 are supported respectively with a bearing 60 fixed to the case 20 and a bearing 62 disposed closer to the rear tire 18 in a manner rotatable but immovable in the axial direction. The output shaft 40 has a spline on a part of its outer periphery surface, which oppositely faces the inner peripheral surface of the bracket 49, establishing spline engagement between the output shaft 40 and the bracket 49. This allows the rotor 44 to rotate about the axis of the output shaft 40 together with the output shaft 40. The adjustment mechanism 50 operates such that the rotor 44 moves back and forth axially along the output shaft 40 for adjustment of the spaced distance G between the rotor 44 and the stator 42.

The adjustment mechanism 50 includes a slider member 51 and a stepping motor 53. The stepping motor 53 is fitted in the case 20. The stepping motor 53 includes a cylindrical stator 54 on its outer periphery and a cylindrical rotor 55 on its inner periphery, which are both disposed coaxially with the axis of the output shaft 40. The stator 54 is fixed to the case 20.

The rotor 55 has, on its outer peripheral surface, plural magnets 55a facing the inner peripheral surface of the stator 54. The rotor 55 also has a cylindrical member 55b on its inner periphery. The cylindrical member 55b is supported rotatably about the axis of the output shaft 40 by a bearing 63 fixed to the case 20 and a bearing 64 fastened to a rotation prevention member 65 fixed to the case 20. Screw threads are formed on an inner peripheral surface of the cylindrical member 55b.

The slider member 51 has the output shaft 40 passing therethrough, and does not rotate on its axis, but moves back and forth axially along the output shaft 40. In accordance with this back and forth movement, the rotor 44 of the rotary electric device 16 can also move back and forth axially.

Specifically, the slider member 51 has: an outer cylindrical portion 51 a on the outer side in the lateral direction of the vehicle; and an inner cylindrical portion 51 b on the rear tire 18 side. The inner cylindrical portion 51 b extends from an edge of the outer cylindrical portion 51 a radially to form another cylindrical shape toward the rear tire 18. The output shaft 40 runs through axes of the outer and inner cylindrical portions 51 a and 51 b. The inner cylindrical portion 51 b mates with the outer surface of the bearing 67. The outer cylindrical portion 51a has screw threads formed on its outer peripheral surface to engage with the screw threads on the inner peripheral surface of the cylindrical member 55b.

A plane is formed partly on the outer cylindrical portion 51 a. The rotation prevention member 65 is disposed on the outside of the plane. The rotation prevention member 65 has a plane on its inner peripheral surface to abut against the plane of the outer cylindrical portion 51 b. Therefore, when the stepping motor 53 operates while the cylindrical member 55b rotates coaxially with the output shaft 40 in one direction, the slider member 51 engaging with the cylindrical member 55b converts the rotational force of the stepping motor 53 into a force acting in the axial direction of the output shaft 40 to move in the direction of the output shaft 40. Then, the slider member 51, together with the bearing 67, press the rotor 44 toward the rear tire 18 in order to increase the spaced distance G. In contrast, the spaced distance G is decreased, when the cylindrical member 55b rotates in the reverse direction. At this moment, the plane part of the slider member 51 abuts against the plane part of the rotation prevention member 65. This stops the slider member 51 from rotating about the axis of the output shaft 40 while allowing the slider member 51 to move back and forth along the axis of the output shaft 40.

When the vehicle moves with a driving force of the engine 12, and the rotary electric device 16 serves as a generator, the adjustment mechanism 50 operates to increase the spaced distance G between the rotor 44 and the stator 42. Thereby, a magnetic reluctance between the rotor 44 and the stator 42 increases while the magnetic flux decreases, resulting in reduction in power generation load to be exerted on the engine 12. In turn, when a charged volume of the battery 10 is insufficient, the spaced distance G can be reduced so that the magnetic reluctance decreases while the magnetic flux increases, thereby efficiently charging the battery 10. When the vehicle moves with a driving force of the rotary electric device 16, the spaced distance G between the rotor 44 and the stator 42 can be reduced so that the magnetic reluctance decreases while the magnetic flux increases, thereby allowing the rotary electric device 16 to provide greater torque. In contrast, if the spaced distance G between the rotor 44 and the stator 42 is increased, then the magnetic flux decreases, thereby causing the rotary electric device 16 to rotate at high speed, although the torque decreases. This allows the rotary electric device 16 to rotate in a wide speed range from low to high. Further, if throttle operation by the rider is detected that the throttle is closed, the spaced distance G can be reduced to utilize regenerative breaking to increase the volume of power generation.

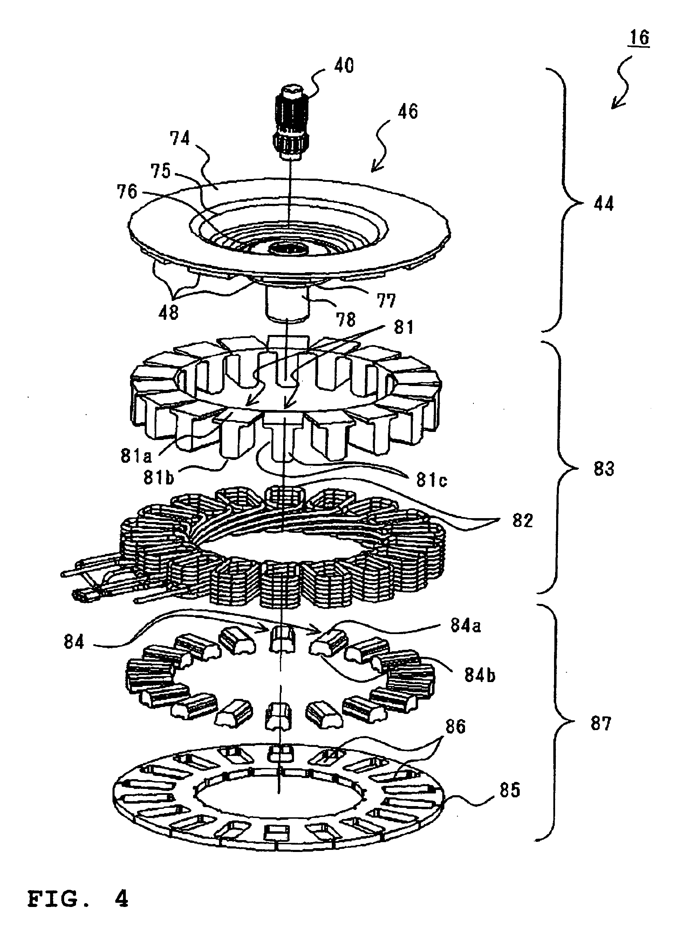

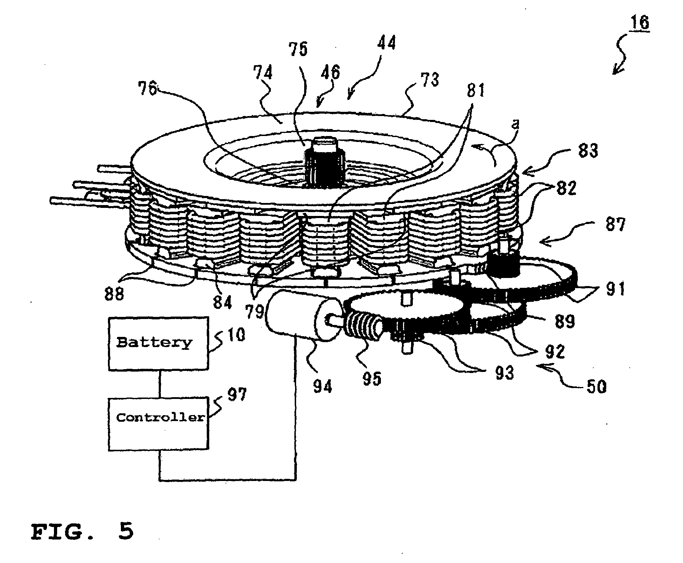

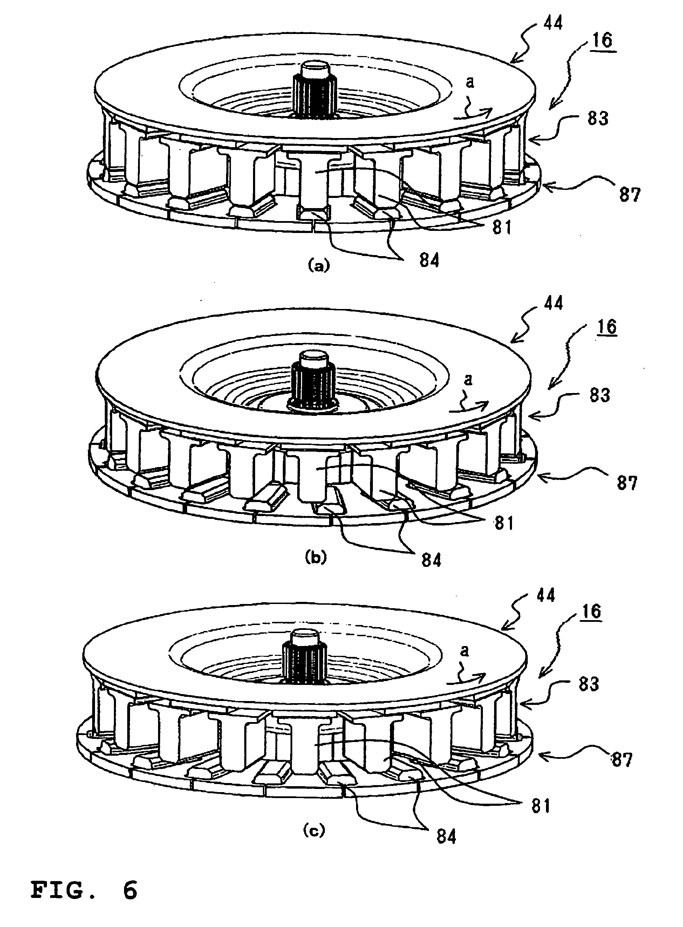

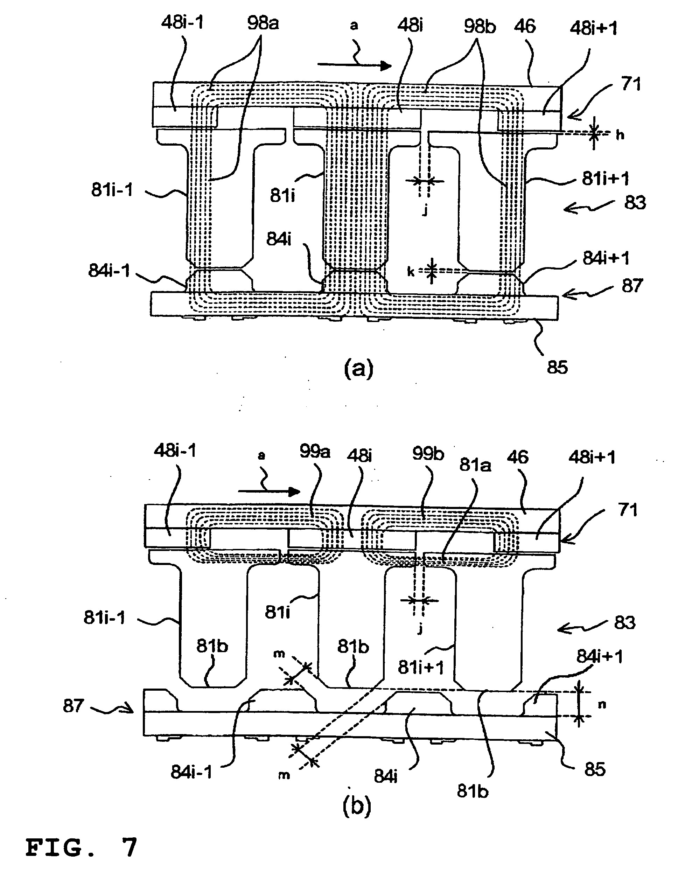

In the aforementioned embodiment, the adjustment mechanism 50 for the rotor 44 and the stator 42 adjusts the spaced distance G therebetween to control a field. According to the invention, the mechanism for controlling the field is achieved by employing a stator 42 that includes a first and a second stator so that the adjustment mechanism 50 causes the second stator to rotate about the output shaft relative to the first stator. With reference to FIGs. 4 through 7, description is made below with respect to a construction of a rotary electric device 16 for rotating a second stator about an output shaft to control the field. FIG. 4 is an exploded perspective view of a rotary electric device 16 provided with a first stator 83 and a second stator 87 in the manner as described. FIG. 5 is a perspective view, showing the assembled rotary electric device 16 in combination with an adjustment mechanism 50. FIGs. 6(a)-6(c) show operations of the second stator 87 which reciprocatively rotates by certain angle relative to the first stator 83 in the rotational direction of the rotor 44. FIGs. 7(a) and 7(b) illustrate a principle of controlling rotation of the rotary electric device 16 from high-torque, low-speed rotation to low-torque, high-speed rotation. In the following description, components common to those shown in FIGs. 1 through 3 are provided with the same reference numerals.

As shown in FIG. 4, the electric rotary machine 16 is provided with the rotor 44 that is designed to rotate in a circular manner about the output shaft 40. A yoke 46 of the rotor 44 includes: a ring portion 74; a tapered portion 75; a first cylindrical portion 76; a second cylindrical portion 78; a ring portion 77; and magnets 48. Plural first teeth 81 are disposed such that their one-end faces 81a face the rotor 44. Coil windings are formed entirely around each side periphery 81c of the first teeth 81, except each top and bottom face thereof (81a and 81b). Each first tooth 81 has: the one end face 81a facing the rotor 44; and the other end face 81b; the one end face 81a being larger than the other end face 81 b. Therefore, a gap between the adjacent first teeth 81 is narrow on the side where the one-end faces 81 a are opposed to the rotor 44 while a gap between the adjacent first teeth 81 is wide on the side of the other end faces 81 b.

The plural first teeth 81 with coil 82 windings around are molded integrally with each other to form the first stator 83 shaped into a ring in its entirety. Torque generating current to be applied to the coil 82 of the first teeth 81 of the first stator 83 is controlled by a basic driving method with no field weakening control implemented.

Second teeth 84 as many as the first teeth 81 are provided so as to oppositely face the end faces 81 b of the first teeth 81, which are opposite to the end faces 81a that oppositely face the rotor 44. Each second tooth 84 has one end 84a disposed opposed to the corresponding end face 81 b of the first teeth 81. The other end 84b of the second tooth 84 is fixedly press-fitted into each fitting hole 86 formed on a ring-shaped base 85.

The second teeth 84 and the base 85, on which the second teeth 84 are fixedly press-fitted into the fitting holes 86, form the second stator 87. Preferably, the second teeth 84 and the base 85 are molded integrally, although the FIG. 4 does not illustrate that.

In FIG. 5, slits 88 in communication with the through holes 86 are formed on the base 85 of the second stator 87. In the rotary electric device 16, the rotor 44, the first stator 83 and the second stator 87 are placed in sequence along the axial direction of the output shaft, facing one another with a slight gap therebetween. The first stator 83 is fixed to the case 20 (see FIG. 3). In contrast, the second stator 87 slightly rotates relative to the first teeth 81. Detailed description of how the second stator 87 rotates will be discussed later.

In the rotary electric device 16, as shown in FIG. 5, gear engagement teeth 89 formed on a part of the peripheral surface of the base 85 of the second stator 87 mesh with a small-diameter gear of a third speed reduction gear 91 of the adjustment mechanism 50. The adjustment mechanism 50 includes the third speed reduction gear 91, a second speed reduction gear 92, a first speed reduction gear 93 and a motor 94. A large-diameter gear of the third speed reduction gear 91 meshes with the small-diameter gear of the second speed reduction gear 92. A large-diameter gear of the second speed reduction gear 92 meshes with a small-diameter gear of the first speed reduction gear 91. A larger-diameter gear of the first speed reduction gear 93 meshes with a worm gear 95 fixed to a distal end of a rotational shaft of the motor 94.

The motor 94 is connected to a controller 97 to be supplied with electric power from a battery 10, and is driven for forward/reverse rotation. The forward/reverse rotation of the motor 94 is converted by the worm gear 95 into rotation about an axis perpendicular to the rotation axis of the motor 94, which reduces the rotational speed. This reduced-speed rotation is transmitted so as to be phased down at three stages according to the gear ratio through the large-diameter gear of the first speed reduction gear 93, the second speed reduction gear 92 and the third speed reduction gear 91. The rotation is eventually transmitted to the gear engagement teeth 89 of the second stator 87. Thus, the second stator 87 is designed to be rotatable slightly in the rotation direction of the rotor 44 relative to the first stator 83. In other words, the second stator 87 continuously reciprocatively rotates by small angle in the rotation direction of the rotor 44 (direction (a) in FIG. 5).

With reference to FIGs. 6(a), 6(b) and 6(c), description is now made referring to reciprocating motion of the second stator 87 in the rotation direction of the rotor 44 relative to the first stator 83. FIGs. 6(a), 6(b) and 6(c) do not illustrate those which are shown in FIG. 5, such as the coil 82, the slit 88, the gear engagement teeth 89 and the adjustment mechanism 50, for the purpose of easily understanding how the second teeth 84 of the second stator 87 displace relative to the first teeth 81 of the first stator 83.

FIG. 6(a) illustrates a positional relationship for the second teeth 84 relative to the first teeth 81 in association with the high-torque, low-speed rotation of the rotary electric device 16 of FIG. 5. In this embodiment, this positional relationship is referred to as a reference position. Due to the rotation of the second stator 87 as described, the second teeth 84 at the reference position of FIG. 6(a), that is, a position where the second teeth 84 directly face the first teeth 81, can rotate (reciprocate) in the arrow (a) direction that the rotor 44 rotates through an intermediate position of FIG. 6(b) to a maximum displaceable position of FIG. 6(c). The maximum displaceable position is in the exactly middle between the first tooth 81 and its adjacent first tooth 81. The intermediate position of FIG. 6(b) indicates any position where the second teeth 84 can rotate continuously and intermittently.

With reference to FIGs. 7(a) and 7(b), description is made for a principle of controlling rotation of the rotary electric device 16 of this embodiment from high-torque, low-speed rotation to low-torque, high-speed rotation. In FIGs. 7(a) and 7(b), the coil 82 windings formed around the first teeth 81, a mold article of the coil 82 and the first teeth 81, and another molded article of the second teeth 84 and the base 85 are not shown for the purpose of facilitating description.

FIG. 7(a) illustrates the high-torque, low-speed rotation in which each second tooth 84 is positioned so as to directly face the corresponding first tooth 81 as shown in FIG. 6(a).

FIG. 7(b) illustrates the low-torque, high-speed rotation in which each second tooth 84 is positioned in the exactly middle between the corresponding first tooth 81 and its adjacent first tooth 81 as shown in FIG. 6(b). In FIG. 7(a), each magnet 48 of the rotor 44 directly faces the corresponding first tooth 81, and each second tooth 84 directly faces the corresponding first tooth 81. In other words, FIG. 7(a) and FIG. 6(a) show the same condition. In FIG. 7(b), the positional relationship between the magnets 48 and the first teeth 81 of the rotor 44 remains unchanged, while each second tooth 84 is positioned in the exactly middle between the corresponding first tooth 81 and its adjacent first tooth 81. In other words, FIG. 7(b) and FIG.6(c) show the same condition.

In FIG. 7(a), a yoke 46, the first teeth 81, the second teeth 84 and the base 85, which all form the rotor 44, have high magnetic permeability, and a gap (h) between the oppositely facing magnets 48 and first teeth 81 and a gap (k) between the oppositely facing first teeth 81 and second teeth 84 are extremely narrow, which results in a low magnetic reluctance in the air gap. As described above, because the end faces 81 a of the first teeth 81, which face the rotor 44, are formed larger than the other end faces 81 b, a gap (j) between the end faces 81 a of the two adjacent first teeth 81, which face the rotor 44, is much more narrower than a gap between the other end faces. The gap (j) is larger than the gap (h) between the end faces 81 a and the rotor 44. That is, there is provided a relation between these gaps: "h≈k<j". Thus, magnetic flux, generated between the magnet 48i (N pole) and its adjacent magnet 48i-1 (S pole), hardly flows through the gap (j) but flows through the gap (h), the first tooth 81 i, the gap (k), the second tooth 84i, the base 85, the second tooth 84i-1, the gap (k), the first tooth 81i-1, the gap (h) and the yoke 46, thereby causing a strong magnetic flux flow 98a. Also, magnetic flux, generated between the magnet 48i (N pole) and its adjacent magnet 48i+1 (S pole), hardly flows through the gap (j) but flows through the gap (h), the first tooth 81 i, the gap (k), the second tooth 84i+1, the base 85, the second tooth 84i+1, the gap (k), the first tooth 81i+1, the gap (h) and the yoke 46, thereby causing a strong magnetic flux flow 98b. Even if N pole of the magnet 48i changes to S pole, the same phenomena, in which a strong magnetic flux flow is generated through the two-associated magnets 48, first teeth 81 and second teeth 84, as well as through the base 85 and the yoke 46, occurs with the exception that the magnetic flux flows in the reverse direction.

The strong magnetic flux flow, or a magnetic reluctance, interferes with the rotary electric device 16 from easily shifting from the high-torque, low speed rotation to the low-torque, high-speed rotation. Thus, in this embodiment, as described in FIG. 5 and FIGs. 6(a)-6(c), the second teeth 84 can rotate (reciprocate), in the arrow (a) direction that the rotor 44 rotates, by a narrow angle range from the reference position, where each second tooth 84 directly faces the corresponding first tooth 81, to the exactly middle position between the corresponding first tooth and its adjacent first tooth (maximum displaceable position).

Suppose the second teeth 84 are rotated from the reference position of FIG. 7(a) to the maximum displaceable position of FIG. 7(b). Under this condition, a gap (m), created between the obliquely facing first teeth 81 and second teeth 84, is greater than the gap (k), created between the directly facing first teeth 81 and second teeth 84. Also, the second teeth 84 are formed to protrude from the base 85. This results in a gap (n), created between the first teeth 81 and the base 85, which is greater than the gap (m) between the first teeth 81 and the second teeth 84.

That is, there is provided a relation between these gaps: "m<n". As described, since the gap (n) is greater than the gap (m), not the gap (m), but the gap (n) is negligible in terms of magnetic reluctance. When each second tooth 84 displaces to the exactly middle position between the corresponding first tooth 81 and its adjacent first tooth 81 as shown in FIG. 7(b), a distance created between the second teeth and the end faces 81 b of the first teeth, the end faces 81 b being opposite to the end faces 81 a that face the rotor 44, can be minimized as the gap (m).

As described above, because the end faces 81a of the first teeth 81, which face a rotor 71, are formed larger than the other end faces 81 b, the gap (j) between the end faces 81a of the two adjacent first teeth 81, which face the rotor 71, is extremely narrow. Under the condition shown in FIG. 7(b), there is provided a relation between the gaps (j) and (m): "j<m". In other words, the distance (j) created between the end face 81 a of the first tooth 81, which faces the rotor 44, and another end face 81 a of the adjacent first tooth 81, which faces the rotor 44, is smaller than the minimum distance (gap (m)) created between the second tooth 84 and the corresponding end face 81 b of the first tooth 81.

Under this condition where a relation "h<j<m<n" is established for the gaps created between the individual members, the magnetic flux generated between the magnet 48i (N pole) and its adjacent magnet 48i-1 (S pole) flows from the first tooth 81 i, not through the second tooth 84i-1 or the base 85, but through the gap (j), the first tooth 81+1 and the yoke 46 due to the magnetic flux reluctances within the gap (m) and within the gap (n), as shown in FIG. 7(b), thereby generating a weak magnetic flux flow 99a. The magnetic flux generated between the magnet 48i (N pole) and its adjacent magnet 48i+1 (S pole) flows from the first tooth 81 i, not through the second tooth 84i+1 or the base 85, but through the gap (j), the first tooth 81 i+1 and the yoke 46 due to the magnetic flux resistances within the gap (m) and within the gap (n), thereby generating a weak magnetic flux flow 99b. This inhibits the magnetic flux from the magnet 48 from crossing one coil 82 (not shown) of the first teeth 81 to the other, and therefore can reduce the magnetic flux reluctance in the rotation direction of the rotor 44, which could cause due to the magnetic flux crossing one coil 82 to the other, thereby allowing high-speed rotation. Likewise, since the magnetic flux from the magnet 48 hardly inflows to a core of the coils of the first teeth 81, reduced torque is generated between the first teeth 81, energized by the coils 82, and the magnets 48, and is applied to the rotor 44. This results in the low-torque, high-speed rotation.

As described, in this embodiment, the rotary electric device 16 solely displaces the second stator 87 in the rotational direction of the rotor 44 relative to the first stator 83 to increase/decrease the magnetic flux flowing from the magnet 48 on the rotor 44 to the first teeth 81. This can facilitate changing rotational output characteristics. Thus, this rotary electric device 16 enables easy adjustment of the magnetic flux flow from the rotor 44 in order to generate electric current according to a charged volume of the battery 10 per unit time. The rotary electric device 16 also allows generating electric current greater than a charged volume of the battery 10 per unit time, thereby inhibiting an excessive power generation load from being exerted to the engine 12.

In the aforementioned embodiment, a belt-driven continuously variable transmission is employed as the speed reduction mechanism 28, but a chain-driven type or a shaft-driven type of mechanism may also be used as the speed reduction mechanism 28. If such a chain- or shaft-driven type speed reduction mechanism is used, the driving force transmission mechanism 14 may be provided with the transmission on the upstream side of the clutch 26.

In the aforementioned embodiment, the rotary electric device 16 is located such that the output shaft 40 thereof is aligned with the rear axle 34. However, the driving force transmission mechanism 14 may be provided with a gear along the route for transmitting a driving force from the clutch 26 to the intermediate shaft, such that the gear shaft and the output shaft 40 of the rotary electric device 16 can be connected together.

The description above discloses (amongst others) an embodiment of a straddle-type hybrid vehicle provided with an engine and a rotary electric device, having: a driving force transmission mechanism for transmitting a driving force outputted from the engine to a driving tire, the driving force transmission mechanism including: a clutch for allowing or disengaging transmission of the driving force to the driving tire; and a mechanism, provided between the clutch and the driving tire, for working in conjunction with an output shaft of the rotary electric device; the rotary electric device including: a rotor; a stator located so as to face the rotor; and an adjustment mechanism for adjusting a field of the rotary electric device.

In this embodiment, the driving force transmission mechanism includes a mechanism for working in conjunction with the output shaft of the rotary electric device between the clutch and the driving tire. Thus, when the rotary electric device is in operation, a driving force of the rotary electric device is transmitted to the driving tire, while the clutch disengages the transmission of the driving force to the engine. As a result, while the rotary electric device is in operation, a crankshaft of the engine and the like do not work in accordance with the rotation of the rotary electric device. This allows a driving force of the rotary electric device to be efficiently transmitted to the driving tire. The field of the rotary electric device can be controlled, and thus a torque of the rotary electric device can be controlled. This dispenses with a clutch mechanism for allowing or disengaging transmission of the driving force of the rotary electric device to the driving tire. In turn, while the engine is in operation, a power generation load to the engine can be controlled. The straddle-type hybrid vehicle described herein may be a hybrid motorcycle (including hybrid scooter), hybrid four-wheeled buggy, hybrid snow mobile, and the like.

According to a further embodiment, the straddle-type hybrid vehicle is provided with an engine and a rotary electric device, and has a driving force transmission mechanism for transmitting a driving force outputted from the engine to a driving tire, the driving force transmission mechanism including: a clutch for allowing or disengaging transmission of the driving force to the driving tire; and a mechanism, provided between the clutch and the driving tire, for working in conjunction with an output shaft of the rotary electric device; the rotary electric device including: a rotor; a stator located so as to face the rotor with a space therebetween; and an adjustment mechanism for adjusting a spaced distance between the rotor and the stator.

According to this embodiment, the spaced distance between the rotor and the stator of the rotary electric device can be adjusted, and thus the power generation load to the engine can be adjusted while the engine is in operation. In the case that no more power generation by the rotary electric device is needed, e.g. the battery has been fully charged, the spaced distance between the rotor and the stator can be increased to reduce the power generation load to the engine. If the charged volume of the battery is insufficient, the spaced distance between the rotor and the stator can be reduced to increase the power generation load to the engine, thereby increasing the volume of power generation. This allows the driving force of the engine to be efficiently transmitted to the driving tire.

According to a further embodiment, there is disclosed a straddle-type hybrid vehicle, in which the stator includes: a first stator disposed so as to face the rotor; and a second stator disposed opposed to a face on the other side of another face that faces the rotor; the first stator has plural teeth with the side peripheral surfaces around which coil windings are formed; the second stator has plural teeth on a face thereof that faces the first stator; and the adjustment mechanism adjusts an angle of the rotation of the second stator about the output shaft relative to the first stator.

According to this embodiment, without variation in a size of the rotary electric device in the direction of the output shaft, a distance between ends of the first teeth and the second teeth can be adjusted to vary magnetic flux flowing the first stator. This allows adjusting the driving force of the rotary electric device.

According to a further embodiment, there is disclosed a straddle-type hybrid vehicle, in which the rotary electric device is located such that the output shaft thereof is parallel to a driving shaft of the driving tire. According to this embodiment, a mechanism can be simplified for transmitting the driving force of the rotary electric device to the driving tire, compared to a rotary electric device located such that the output shaft thereof lies vertically or obliquely relative to the driving shaft. In other words, if the rotary electric device is located such that the output shaft thereof lies vertically or obliquely relative to the driving shaft, then another mechanism is needed for converting a force rotating in the direction of the output shaft into a force rotating in the direction of the driving shaft. However, the teaching of the present embodiment requires no such mechanism.

According to a further embodiment, there is disclosed a straddle-type hybrid vehicle, in which the rotary electric device is located such that an axis of the output shaft of the rotary electric device is aligned with an axis of the driving shaft of the driving tire. According to this embodiment, the output shaft of the rotary electric device can be connected to the driving shaft to which an engine speed minimized through gears, such as a transmission, is transferred. This can reduce the rotational speed of the rotary electric device, thereby improving durability thereof. Further, a voltage, generated when the rotary electric device serves as a generator, can be decreased, compared to a rotary electric device connected to a member (e.g. driving pulley or driving sprocket) disposed closer to the engine in the driving force transmission mechanism. This results in a lower voltage being applied from the rotary electric device to electrical components connected thereto, which reduces a chance of failure of the electrical components, thereby providing a vehicle with excellent durability of the electrical components.

According to a further embodiment, there is disclosed a straddle-type hybrid vehicle, in which a gear is mounted to the driving shaft; the driving force transmission mechanism further has an intermediate shaft for transmitting the driving force of the engine; the intermediate shaft is linked to the driving shaft via the gear while being positioned such that a distance between axes of the intermediate shaft and the driving shaft is smaller than a radius of a wheel of the driving tire. According to this embodiment, the driving force transmission mechanism can be closer to a center in the lateral direction of the vehicle, thereby ensuring a large banking angle. In other words, the driving tire lies generally outside of an outer periphery of the wheel in the lateral direction of the vehicle. According to this embodiment, the intermediate shaft is positioned such that the distance between the axes of the intermediate shaft and the driving shaft is smaller than a radius of the wheel. Thus, the intermediate shaft can be closer to the center in the lateral direction of the vehicle, compared to an intermediate shaft located side of the driving tire in the lateral direction of the vehicle. Accordingly, the driving force transmission mechanism can be closer to the center in the lateral direction of the vehicle, thereby ensuring a large banking angle.

According to a further embodiment, there is disclosed a straddle-type hybrid vehicle, in which the intermediate shaft is located closer to the crankshaft of the engine than the driving shaft is. According to this embodiment, a speed reduction mechanism (e.g. a chain- or belt-driven type speed reduction mechanism) for transmitting the driving force of the engine from the crankshaft to the intermediate shaft can be smaller in size, compared to an intermediate shaft provided above the driving shaft. This results in reduction in size of the driving force transmission mechanism.

The description discloses a further embodiment of a straddle-type hybrid vehicle, in which the intermediate shaft is spaced away from the crankshaft of the engine; the driving force transmission mechanism further has a speed reduction mechanism, which extends in the direction the vehicle moves ahead along a route for transmitting the driving force from the crankshaft to the intermediate shaft, for transmitting the driving force of the engine from the crankshaft to the intermediate shaft; and the rotary electric device is provided on the outer side in the lateral direction of the vehicle than the speed reduction mechanism is. According to this embodiment, the speed reduction mechanism (e.g. a chain- or belt-driven type speed reduction mechanism) for transmitting the driving force of the engine from the crankshaft to the intermediate shaft is located between the driving tire and the rotary electric device. This can reduce the size of the driving force transmission mechanism, compared to the driving force transmission member located outside of the rotary electric device.

## Claims

1. Straddle-type hybrid vehicle provided with an engine (12) and a rotary electric device (16), comprising a driving force transmission mechanism (14) for transmitting a driving force outputted from the engine (12) to a driving wheel, wherein the driving force transmission mechanism (14) includes a clutch (26) for allowing or disengaging transmission of the driving force to the driving wheel, and an intermediate mechanism (36), which is provided between the clutch (26) and the driving wheel, for working in conjunction with an output shaft (40) of the rotary electric device (16), **characterized by** an adjustment mechanism (50) for adjusting a field of the rotary electric device (16) wherein the stator includes a first stator (83) disposed so as to face the rotor (44), and a second stator (87) disposed opposed to a face (81 b) on the other side of another face (81 a) that faces the rotor (44), wherein the first stator (83) has plural first teeth (81) with the side peripheral surfaces (81c) around which coil windings (82) are formed, wherein the second stator (87) has plural second teeth (84) on a face thereof that faces the first stator (83), and wherein the adjustment mechanism (50) adjusts an angle of the rotation of the second stator (87) about the output shaft relative to the first stator (83).

2. Straddle-type hybrid vehicle according to claim 1, **characterized in that** the rotary electric device (16) is located such that the output shaft thereof is parallel to a driving shaft (34) of the driving wheel.

3. Straddle-type hybrid vehicle according to claim 2, **characterized in that** the rotary electric device (16) is located such that an axis of the output shaft (40) of the rotary electric device (16) is aligned with an axis of the driving shaft (34) of the driving wheel.

4. Straddle-type hybrid vehicle according to one of the claims 1 to 3, **characterized in that** the intermediate mechanism provided between the clutch and the driving wheel comprises a gear mechanism for the driving force transmission member to work in conjunction with the output shaft (40) of the rotary electrical device (16).

5. Straddle-type hybrid vehicle according to claim 4, **characterized in that** a gear (34a) is mounted to the driving shaft (34), and the driving force transmission mechanism (14) further has an intermediate shaft (30) for transmitting the driving force of the engine (12), and wherein the intermediate shaft (30) is linked to the driving shaft (34) via the gear (34a) while being positioned such that a distance between axes of the intermediate shaft (30) and the driving shaft (34) is smaller than a radius of a wheel of the driving wheel.

6. Straddle-type hybrid vehicle according to claim 5, **characterized in that** the intermediate shaft (30) is located closer to the crankshaft (24) of the engine (12) than the driving shaft (34) is.

7. Straddle-type hybrid vehicle according to claim 4 or 5, **characterized in that** the intermediate shaft (30) is spaced away from the crankshaft (24) of the engine (12), and wherein the driving force transmission mechanism (14) further has a speed reduction mechanism (28), which extends in the longitudinal direction of the vehicle for transmitting the driving force from the crankshaft to the intermediate shaft, for transmitting the driving force of the engine (12) from the crankshaft (24) to the intermediate shaft (30), and wherein the rotary electric device (16) is provided on the outer side in the lateral direction of the vehicle relative to the speed reduction mechanism (28).

## Patentansprüche

1. Hybrid- Fahrzeug vom Grätschsitz- Typ mit einem Motor (12) und einer rotierenden elektrischen Vorrichtung (16), aufweisend eine Antriebskraft- Übertragungsvorrichtung (14) zum Übertragen einer Antriebskraft, ausgegeben von dem Motor (12) auf ein Antriebsrad, wobei die Antriebskraft- Übertragungsvorrichtung (14) eine Kupplung (26) enthält, um die Übertragung der Antriebskraft auf das Antriebsrad, oder deren Unterbrechung zu gestatten, und eine Zwischenvorrichtung (36), die zwischen der Kupplung (26) und dem Antriebsrad angeordnet ist, um in Verbindung mit einer Ausgangswelle (40) der rotierenden elektrischen Vorrichtung (16) zu arbeiten, **gekennzeichnet durch** eine Einstellvorrichtung (50) zum Einstellen eines Feldes der rotierenden elektrischen Vorrichtung (16), wobei der Stator einen ersten Stator (83) enthält, angeordnet um dem Rotor (44) zugewandt zu sein, und einen zweiten Stator (87), angeordnet gegenüberliegend zu einer Fläche (81 b) auf der anderen Seite einer weiteren Fläche (81 a), die dem Rotor zugewandt ist, wobei der erste Stator (83) mehrere erste Zähne (81) an den seitlichen Umfangsoberflächen (81 c) hat, um die herum die Spulenwicklungen (82) gebildet sind, wobei der zweite Stator (87) mehrere zweite Zähne (84) auf einer Fläche desselben hat, die dem ersten Stator (83) zugewandt ist, und wobei die Einstellvorrichtung (50) einen Drehwinkel des zweiten Stators (87) um die Ausgangswelle im Verhältnis zu dem ersten Stator (83) einstellt.

2. Hybrid- Fahrzeug vom Grätschsitz- Typ nach Anspruch 1, **dadurch gekennzeichnet, dass** die rotierende elektrischen Vorrichtung (16) angeordnet ist derart, dass die Ausgangswelle derselben zu einer Antriebswelle (34) des Antriebsrades parallel ist.

3. Hybrid- Fahrzeug vom Grätschsitz- Typ nach Anspruch 2, **dadurch gekennzeichnet, dass** die rotierende elektrischen Vorrichtung (16) angeordnet ist derart, dass eine Achse der Ausgangswelle (40) der rotierenden elektrischen Vorrichtung (16) mit einer Achse der Antriebswelle (34) des Antriebsrades ausgerichtet ist.

4. Hybrid- Fahrzeug vom Grätschsitz- Typ nach einem der Ansprüche 1 bis 3, **dadurch gekennzeichnet, dass** die Zwischenvorrichtung, vorgesehen zwischen der Kupplung und dem Antriebsrad, eine Getriebevorrichtung für das Antriebskraftübertragungsteil aufweist, um in Verbindung mit der Ausgangswelle (40) der rotierenden elektrischen Vorrichtung (16) zu arbeiten.

5. Hybrid- Fahrzeug vom Grätschsitz- Typ nach Anspruch 4, **dadurch gekennzeichnet, dass** ein Zahnrad (34a) auf der Antriebswelle (34) montiert ist und die Antriebskraft- Übertragungsvorrichtung (14) außerdem eine Zwischenwelle (30) zum Übertragen der Antriebskraft des Motors (12) hat, und wobei die Zwischenwelle (30) mit der Antriebswelle (34) über das Zahnrad (34a) verbunden ist, während sie positioniert ist derart, dass ein Abstand zwischen den Achsen der Zwischenwelle (30) und der Antriebswelle (34) kleiner als ein Radius eines Rades des Antriebsrades ist.

6. Hybrid- Fahrzeug vom Grätschsitz- Typ nach Anspruch 5, **dadurch gekennzeichnet, dass** die Zwischenwelle (30) näher zu der Kurbelwelle (24) des Motors (12) als die Antriebswelle (34) angeordnet ist.

7. Hybrid- Fahrzeug vom Grätschsitz- Typ nach Anspruch 4 oder 5, **dadurch gekennzeichnet, dass** die Zwischenwelle (30) von der Kurbelwelle (24) des Motors (12) weg beabstandet ist und wobei die Antriebskraft- Übertragungsvorrichtung (14) außerdem eine Drehzahlreduzierungsvorrichtung (28) hat, die sich in der Längsrichtung des Fahrzeuges zum Übertragen der Antriebskraft von der Kurbelwelle auf die Zwischenwelle erstreckt, um die Antriebskraft des Motors (12) von der Kurbelwelle (24) auf die Zwischenwelle (30) zu übertragen, und wobei die rotierende elektrische Vorrichtung (16) auf der Außenseite in der seitlichen Richtung des Fahrzeuges relativ zu der Drehzahlreduzierungsvorrichtung (28) vorgesehen ist.

## Revendications

1. Véhicule hybride du type monté à califourchon pourvu d'un moteur (12) et d'un dispositif électrique rotatif (16), comprenant un mécanisme de transmission de force d'entraînement (14) pour transmettre une force d'entraînement délivrée par le moteur (12) à une roue motrice, dans lequel le mécanisme de transmission de force d'entraînement (14) comprend un embrayage (26) pour permettre ou désengager la transmission de la force d'entraînement à la roue motrice, et un mécanisme intermédiaire (36), qui est prévu entre l'embrayage (26) et la roue motrice, pour agir conjointement avec un arbre de sortie (40) du dispositif électrique rotatif (16), **caractérisé par** un mécanisme d'ajustement (50) pour ajuster un champ du dispositif électrique rotatif (16), dans lequel le stator comprend un premier stator (83) disposé de manière à faire face au rotor (44), et un deuxième stator (87) disposé opposé à une face (81b) de l'autre côté d'une autre face (81a) qui fait face au rotor (44), dans lequel le premier stator (83) comporte plusieurs premières dents (81) autour des surfaces périphériques latérales (81c) desquelles des spires de bobines (82) sont formées, dans lequel le deuxième stator (87) comporte une pluralité de deuxièmes dents (84) sur une face de celui-ci qui fait face au premier stator (83), et dans lequel le mécanisme d'ajustement (50) ajuste un angle de la rotation du deuxième stator (87) autour de l'arbre de sortie par rapport au premier stator (83).

2. Véhicule hybride du type monté à califourchon selon la revendication 1, **caractérisé en ce que** le dispositif électrique rotatif (16) est placé de sorte que l'arbre de sortie de celui-ci soit parallèle à un arbre d'entraînement (34) de la roue motrice.

3. Véhicule hybride du type monté à califourchon selon la revendication 2, **caractérisé en ce que** le dispositif électrique rotatif (16) est placé de sorte qu'un axe de l'arbre de sortie (40) du dispositif électrique rotatif (16) soit aligné avec un axe de l'arbre d'entraînement (34) de la roue motrice.

4. Véhicule hybride du type monté à califourchon selon l'une des revendications 1 à 3, **caractérisé en ce que** le mécanisme intermédiaire prévu entre l'embrayage et la roue motrice comprend un mécanisme d'engrenage pour que l'élément de transmission de force d'entraînement agisse conjointement avec l'arbre de sortie (40) du dispositif électrique rotatif (16).

5. Véhicule hybride du type monté à califourchon selon la revendication 4, **caractérisé en ce qu'**un engrenage (34a) est monté sur l'arbre d'entraînement (34), et le mécanisme de transmission de force d'entraînement (14) comporte en outre un arbre intermédiaire (30) pour transmettre la force d'entraînement du moteur (12), et dans lequel l'arbre intermédiaire (30) est relié à l'arbre d'entraînement (34) par l'intermédiaire de l'engrenage (34a) tandis qu'il est positionné de sorte qu'une distance entre les axes de l'arbre intermédiaire (30) et de l'arbre d'entraînement (34) soit inférieure à un rayon de roue de la roue motrice.

6. Véhicule hybride du type monté à califourchon selon la revendication 5, **caractérisé en ce que** l'arbre intermédiaire (30) est placé plus près du vilebrequin (24) du moteur (12) que l'arbre d'entraînement (34).

7. Véhicule hybride du type monté à califourchon selon la revendication 4 ou 5, **caractérisé en ce que** l'arbre intermédiaire (30) est espacé du vilebrequin (24) du moteur (12), et dans lequel le mécanisme de transmission de force d'entraînement (14) comporte en outre un mécanisme de réduction de vitesse (28), qui s'étend dans la direction longitudinale du véhicule pour transmettre la force d'entraînement du vilebrequin à l'arbre intermédiaire, pour transmettre la force d'entraînement du moteur (12) du vilebrequin (24) à l'arbre intermédiaire (30), et dans lequel le dispositif électrique rotatif (16) est prévu du côté extérieur dans la direction latérale du véhicule par rapport au mécanisme de réduction de vitesse (28).
